# EUROPEAN PATENT APPLICATION

(11) **EP 2 840 517 A2**
(43) Date of publication of application: **25.02.2015**
(21) Application number: 14181434.3
(22) Date of filing: 19.08.2014
(51) Int. Cl.: G06F 17/30

(54) **Method and apparatus for managing images in electronic device**

(30) Priority: 23.08.2013 KR 20130100285
(71) Applicant: Samsung Electronics Co., Ltd, Gyeonggi-do 443-742 (KR)
(72) Inventor: Kim, Geonsoo, 443-742 Gyeonggi-do (KR); Lee, Sunkee, 443-742 Gyeonggi-do (KR); Kim, Hanjib, 443-742 Gyeonggi-do (KR)
(74) Representative: Jenkins, Richard Gavin

(57) **Abstract**

A method and apparatus for managing images in an electronic device is provided. The method includes receiving a grouping command in a state where images are displayed in succession, grouping the displayed images so that images having compositions similar to those of images specified by the grouping command are combined into a single group, and displaying a representative image for the group in replacement of the grouped images having similar compositions. According to the present disclosure, images with similar compositions may be grouped and ungrouped according to a simple user input. Hence, it is possible to effectively manage burst-shot images.

## Description

### TECHNICAL FIELD

The present disclosure relates to a method and apparatus for managing images stored in an electronic device. More particularly, the present disclosure relates to a method and apparatus that enable a user to conveniently manage many captured images on an electronic device.

### BACKGROUND

Advanced electronic devices having camera modules such as mobile terminals support burst or continuous shot mode. Burst shot mode is particularly useful when the target object is in successive motion such as diving. In burst shot mode, multiple photographs can be captured and saved in succession by a single touch on the shot button.

When burst shot mode is used, multiple images with similar compositions are generated. With continuous advancement of camera technology for mobile terminals, the maximum number of photographs that can be captured in a single burst will continue to increase. As such, there is a desire to develop a user interface that enables a user to manage and utilize images in a more convenient manner.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and apparatus that enable effective management of images captured in succession through grouping and ungrouping of images with similar compositions according to a simple user input.

Another aspect of the present disclosure is to provide a method and apparatus that can group and ungroup not only images captured in succession but also images with similar attributes.

In accordance with an aspect of the present disclosure, a method for managing images stored in an electronic device is provided. The method includes receiving a grouping command in a state where images are displayed in succession and grouping the displayed images so that images having compositions similar to those of images specified by the grouping command are combined into a single group, and displaying a representative image for the group in replacement of the grouped images.

The displaying of the representative image may include either grouping the displayed images so that images specified by the grouping command are combined into a single group and displaying a representative image for the group in replacement of the grouped images, or grouping the displayed images into multiple groups of images having similar compositions according to a preset grouping rule and displaying representative images for the groups in replacement of the grouped images.

The method may further include receiving an ungrouping command for a representative image and breaking an image group associated with the representative image into constituent images and displaying the constituent images in succession.

In accordance with another aspect of the present disclosure, an apparatus for managing images stored in an electronic device is provided. The apparatus includes a display unit configured to display images and a control unit configured to control a process of receiving a grouping command in a state where images are displayed in succession, to control to group the displayed images so that images having compositions similar to those of images specified by the grouping command are combined into a single group, and to control to display a representative image for the group of images having similar compositions.

The control unit may be configured to control an operation to group the displayed images so that images specified by the grouping command are combined into a single group and to display a representative image for the group in replacement of the grouped images. Alternatively, the control unit may be configured to control an operation to group the displayed images into multiple groups of images having similar compositions according to a preset grouping rule, and to control to display representative images for the groups in replacement of the grouped images.

The control unit may be configured to control a process of receiving an ungrouping command for a representative image, breaking an image group associated with the representative image into constituent images, and to control to display the constituent images in succession.

In a feature of the present disclosure, images with similar compositions may be grouped and ungrouped according to a simple user input, enabling effective management of continuously captured images. Hence, it is possible to enhance user convenience, and the user may intuitively recognize a scheme for managing continuously captured images.

In addition, not only images captured in succession but also images with similar attributes may be grouped and ungrouped, and hence numerous images may be managed in an effective manner.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates display of images captured in succession according to an embodiment of the present disclosure;
FIG. 2 is a block diagram of an electronic device according to an embodiment of the present disclosure;
FIG. 3 is a flowchart of a procedure for grouping and ungrouping images displayed in succession according to an embodiment of the present disclosure;
FIG. 4 is a flowchart of a procedure for grouping images and displaying a representative image according to an embodiment of the present disclosure;
FIG. 5 illustrates entering of a grouping command according to an embodiment of the present disclosure;
FIGS. 6A and 6B illustrate grouping of images captured in succession and display of a representative image according to an embodiment of the present disclosure;
FIGS. 7A, 7B, and 7C illustrate display of a representative image in various forms according to an embodiment of the present disclosure;
FIG. 8 illustrates a result of grouping images into multiple groups of images having similar attributes in terms of shooting gap, shooting location and creation time according to an embodiment of the present disclosure;
FIG. 9 illustrates entering of an ungrouping command according to an embodiment of the present disclosure;
FIG. 10 illustrates display of ungrouped images and recommended images according to an embodiment of the present disclosure; and
FIG. 11 illustrates another display of recommended images according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

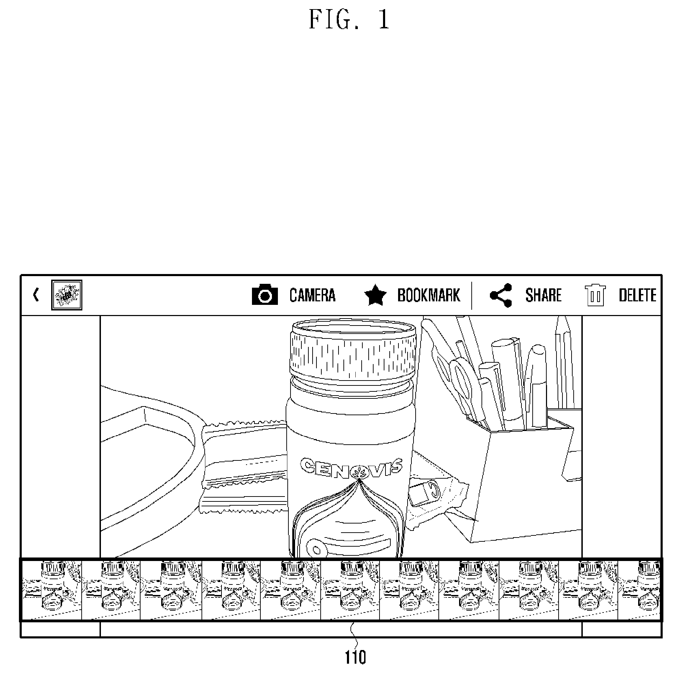

FIG. 1 illustrates display of images according to an embodiment of the present disclosure.

As shown in FIG. 1, in an image display mode, thumbnails of images captured in succession may be displayed in a list form 110 in a lower end region of the screen.

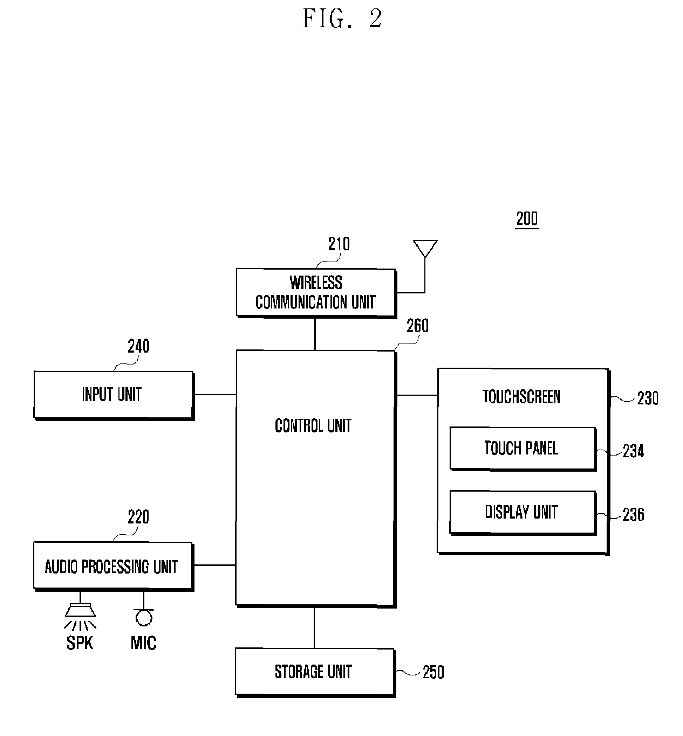

FIG. 2 is a block diagram of an electronic device 200 according to an embodiment of the present disclosure.

Referring to FIG. 2, the electronic device 200 may include a wireless communication unit 210, an audio processing unit 220, a touchscreen 230, an input unit 240, a storage unit 250, a control unit 260, and other similar and/or suitable components.

The wireless communication unit 210 performs data transmission and reception for wireless communication of the electronic device 200. The wireless communication unit 210 may include a Radio Frequency (RF) transmitter for upconverting the frequency of a signal to be transmitted and amplifying the signal, and a RF receiver for low-noise amplifying a received signal and downconverting the frequency of the received signal. The wireless communication unit 210 may receive data through a radio channel and forward the data to the control unit 260, and may transmit data from the control unit 260 through a radio channel.

The audio processing unit 220 may include a COder/DECoder (CODEC). The codec may have a data codec for processing packet data and the like, and an audio codec for processing an audio signal such as a voice signal. The audio processing unit 220 converts a digital audio signal into an analog audio signal through the audio codec to reproduce the analog audio signal through a SPeaKer (SPK), and converts an analog audio signal from a MICrophone(MIC) into a digital audio signal through the audio codec.

The touchscreen 230 may include a touch panel 234 and a display unit 236. The touch panel 234 senses user touch input. The touch panel 234 may include a touch senor using a capacitive overlay, a resistive overlay, infrared beams, a pressure sensor, or any other similar and/or suitable touch sensor. A sensor of any type capable of sensing contact with an object or pressure caused by an object may be included in the touch panel 234.

The touch panel 234 senses a user touch input, generates a sensing signal corresponding to the touch input, and sends the sensing signal to the control unit 260. The sensing signal includes coordinate data of a touch input. When the user performs a touch and move gesture, the touch panel 234 generates a sensing signal containing coordinate data of the touch and movement path and sends the sensing signal to the control unit 260.

In particular, the touch panel 234 may sense grouping and ungrouping commands for images displayed in succession. Here, a grouping command may correspond to a multipoint touch gesture that involves touching images displayed in succession with two fingers and dragging the two fingers together on the touchscreen 230. An ungrouping command may correspond to a multipoint touch gesture that involves touching a representative image with two fingers and dragging the two fingers apart on the touchscreen 230.

The display unit 236 may be realized using Liquid Crystal Display (LCD) devices, Organic Light Emitting Diodes (OLED), Active Matrix Organic Light Emitting Diodes (AMOLED), or the like. The display unit 236 provides the user with various visual information such as menus of the electronic device 200, input data and function setting information. In particular, the display unit 236 may display multiple groups of images captured in succession and representative images for burst groups.

The electronic device 200 may include a touchscreen as described above. However, the present disclosure is not necessarily limited to such an electronic device having a touchscreen. When the present disclosure is applied to an electronic device without a touchscreen, the function of the touchscreen 230 shown in FIG. 2 may be restricted to that of the display unit 236 and the function of the touch panel 234 may be replaced with that of the input unit 240 described below.

The input unit 240 generates an input signal corresponding to user manipulation for controlling the electronic device 200 and sends the input signal to the control unit 260. The input unit 240 may include a keypad composed of numeric keys and direction keys, and function keys formed at a side of the electronic device 200. The electronic device 200 can be fully manipulated for certain embodiments of the present disclosure using only the touchscreen 230. Here, the function of the input unit 240 may be replaced with that of the touch panel 234.

In particular, the input unit 240 may receive grouping and ungrouping commands for images displayed in succession. Here, a grouping command may correspond to a multipoint touch gesture that involves touching images displayed in succession with two fingers and dragging the two fingers together on the touchscreen 230. An ungrouping command may correspond to a multipoint touch gesture that involves touching a representative image with two fingers and dragging the two fingers apart on the touchscreen 230.

The storage unit 250 stores programs and data used for operation of the electronic device 200, and may be divided into a program section and a data section.

The program section may be used to store vendor provided programs such as a program for controlling the overall operation of the electronic device 200 and an Operating System (OS) for booting the electronic device 200, and user installed applications related to, for example, games and social networking services.

The data section may be used to store data generated in the course of using the electronic device 200, such as images, moving images, phonebook entries and audio data. In particular, the data section may store information regarding transitions between application execution states and store thumbnail images for application execution screens.

The control unit 260 controls overall operation of individual components of the electronic device 200. In particular, the control unit 260 may examine a user input received through the input unit 240. When the user input is a grouping command for images displayed in succession, the control unit 260 may combine images having compositions similar to the composition of the image indicated by the grouping command into a single group and display a representative image for the group in replacement of the grouped images.

In addition, the control unit 260 may combine only images indicated by a grouping command into a single group or group displayed images into groups of images having similar compositions according to a preset grouping rule, and display a representative image for each image group in replacement of the grouped images.

Examples of a graphical interface, which is configured to group images displayed in succession and to display a representative image replacing the grouped images, are described further below with reference to the drawings.

When a user input received through the input unit 240 is an ungrouping command, the control unit 260 may ungroup the image group indicated by the ungrouping command and display the ungrouped images in succession. Additionally, the control unit 260 may select a recommended image among the ungrouped images and display the recommended image in a manner distinguished from the other images.

Examples of a graphical interface, which is configured to ungroup an image group indicated by an ungrouping command, to display the ungrouped images in succession, and to display a recommended image in a distinguished manner, are described further below with reference to the drawings.

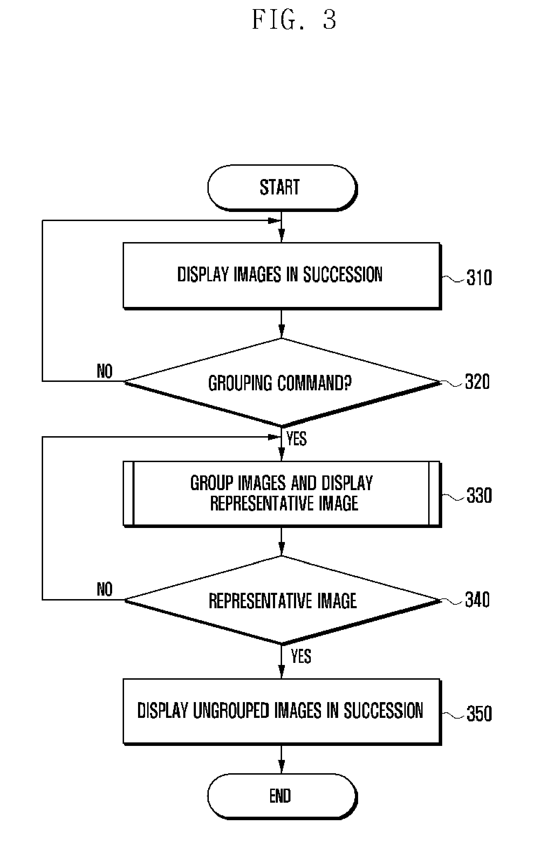

FIG. 3 is a flowchart of a procedure for grouping and ungrouping images displayed in succession according to an embodiment of the present disclosure.

Referring to FIG. 3, at operation 310, the control unit 260 displays images stored in the storage unit 250 in succession. For example, in an image display mode, the control unit 260 may display thumbnails of images captured in succession in a list form in a lower end region of the screen as shown in FIG. 1.

However, the present disclosure is not limited to the display of images captured in succession. That is, at operation 310, the control unit 260 may display continuously captured images in succession or display other images stored in the storage unit 250 in succession.

At operation 320, the control unit 260 determines whether a user input received through the input unit 240 or the touchscreen 230 is a grouping command.

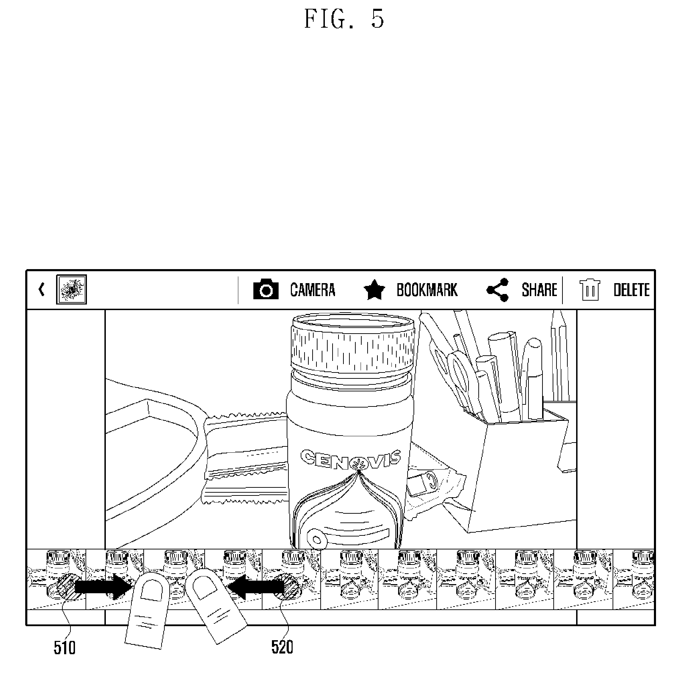

In one embodiment, a grouping command may correspond to a multipoint touch gesture that involves touching images displayed in succession with two fingers and dragging the two fingers together on the touchscreen 230. An example of a grouping command is illustrated in FIG. 5.

FIG. 5 illustrates a grouping command according to an embodiment of the present disclosure.

As shown in FIG. 5, a grouping command may correspond to a multipoint touch gesture that involves touching images displayed in succession with two points 510 and 520 and dragging the two fingers together on the touchscreen.

In one embodiment, a grouping command may be repeated. For example, a first multipoint touch followed by dragging the two fingers together on the touchscreen and a second multipoint touch followed by dragging the two fingers together on the touchscreen may constitute a grouping command.

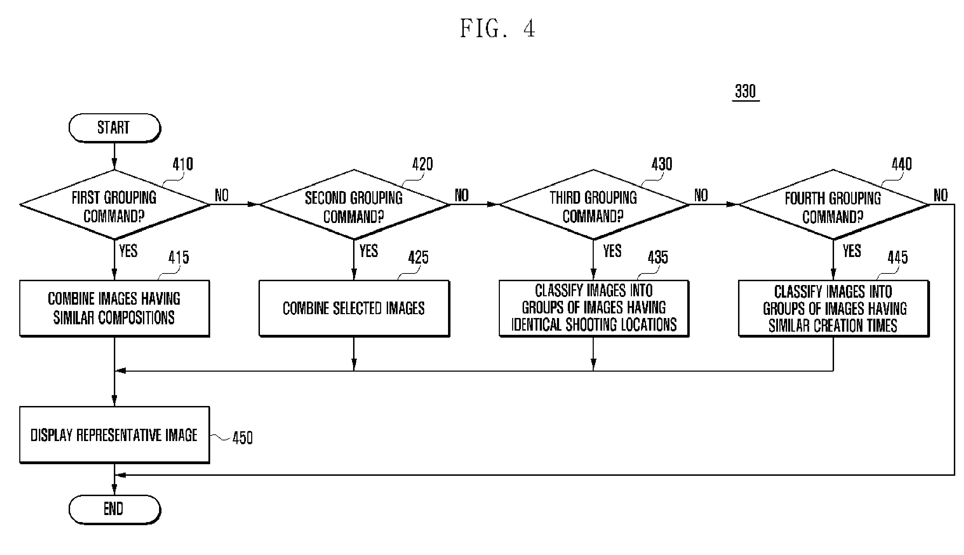

Referring back to FIG. 3, if the user input is a grouping command, the control unit 260 proceeds to operation 330 at which point the control unit 260 groups the displayed images and displays a representative image. Operation 330 is described in more detail below with reference to FIG. 4.

FIG. 4 is a flowchart of a procedure for grouping images and displaying a representative image, which corresponds to operation 330 of FIG. 3, according to an embodiment of the present disclosure.

Referring to FIG. 4, at operations 410 and 415, as one embodiment of the present disclosure, images having compositions similar to that of an image indicated by the grouping command are combined into a single group and in operation 450 a representative image for the group is displayed in replacement of the grouped images.

At operations 420 and 425, as another embodiment of the present disclosure, only images indicated by the grouping command are combined into a single group and in operation 450 a representative image for the group is displayed in replacement of the grouped images.

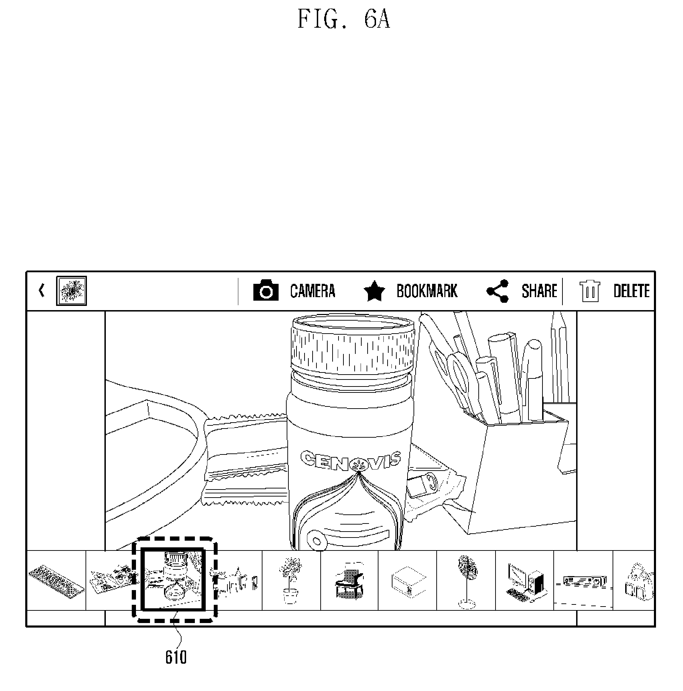

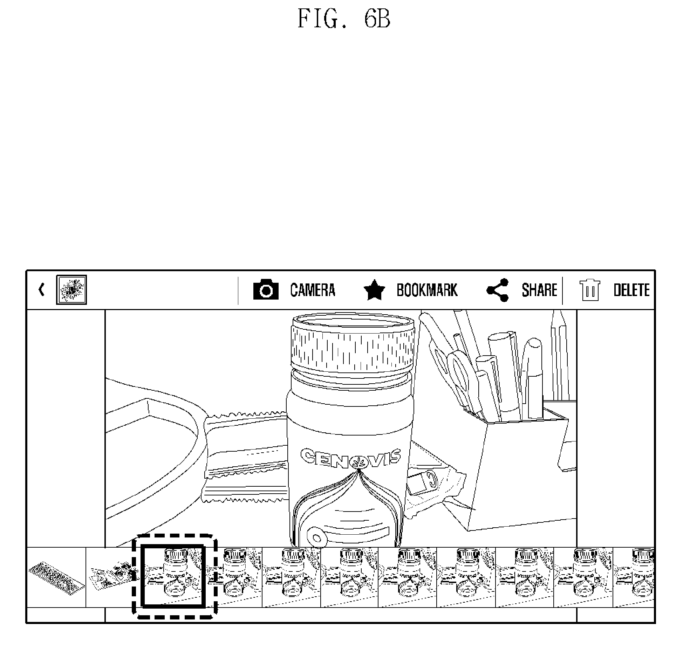

The difference between operation 415 and operation 425 is that operation 415 combines all images having compositions similar to those of images specified by the grouping command, and operation 425 combines only images specified by the grouping command. Screen representations illustrating results of operations 410 to 425 are shown in FIGS. 6A and 6B.

FIGS. 6A and 6B illustrate grouping of images captured in succession and display of a representative image according to an embodiment of the present disclosure.

For example, referring to FIG. 5, it may be considered that the grouping command specifies images displayed between touch points 510 and 520 (inclusive). In this regard, FIG. 6A illustrates a case wherein all images having compositions similar to those of images specified by the grouping command (i.e. a set of burst-shot images) are combined in a lump and a representative image 610 is displayed (in operations 410 and 415).

Hence, images having different compositions are displayed on the left and right sides of the representative image 610. As illustrated in FIG. 6A, it is possible to combine images captured in succession into a single group.

On the other hand, FIG. 6B illustrates a case wherein only images specified by the grouping command are combined into a group and a representative image 620 for the group is displayed (in operations 420 and 425).

As the representative image 620 is displayed in replacement of the images displayed between touch points 510 and 520 (inclusive), images having different compositions may be displayed on the left side of the representative image 620 and images having similar compositions may be displayed on the right side thereof. As illustrated in FIG. 6B, it is possible to combine not only images captured in succession but also images displayed in succession according to user selection.

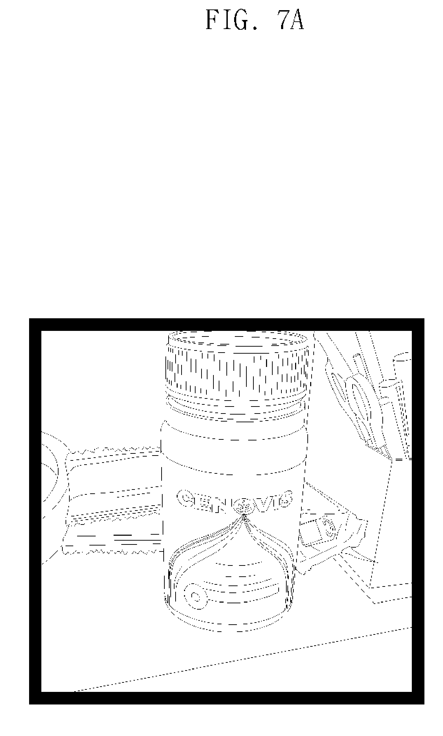

In the present disclosure, a representative image may be displayed in different forms. FIGS. 7A to 7C illustrate display of a representative image in different forms according to an embodiment of the present disclosure.

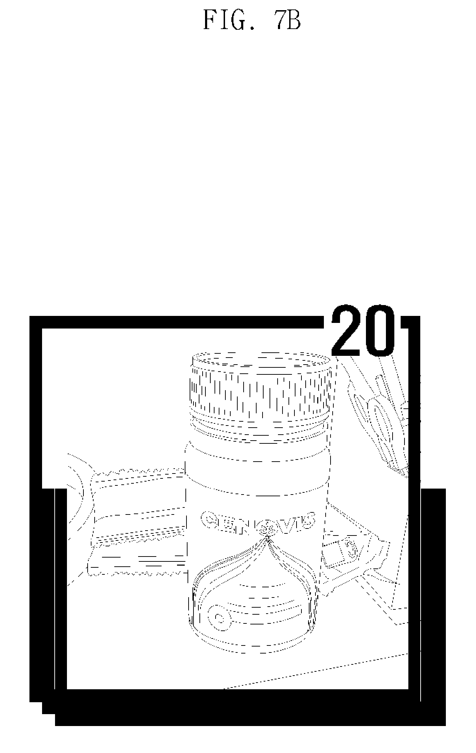

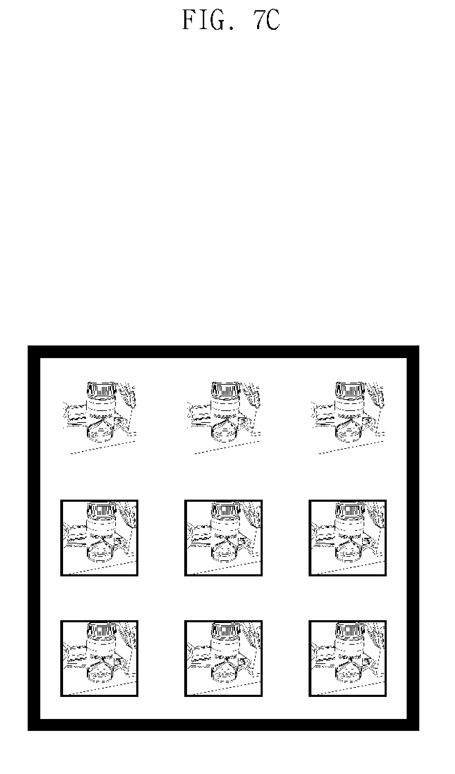

As shown in FIG. 7A, a representative image may be an image that is selected by the control unit 260 from among the grouped images as the best image in terms of shake or resolution. As shown in FIG. 7B, a representative image may be an image selected as the best image together with a number indicating the number of images grouped. As shown in FIG. 7C, a representative image may be an image composed of small-sized images corresponding to the images grouped.

Referring back to FIG. 4, at operations 430 and 435, as an embodiment of the present disclosure, displayed images are grouped into multiple groups of images having similar compositions in terms of shooting location, and in operation 450 representative images are displayed in replacement of the resulting image groups. Hence, it is possible to group multiple sets of images captured in succession at different locations with a single grouping command.

At operations 440 and 445, as another embodiment of the present disclosure, displayed images are grouped into multiple groups of images having similar compositions in terms of creation time (e.g., hour, day, month or year), and in operation 450 representative images are displayed in replacement of the resulting image groups. Hence, it is possible to group multiple sets of images captured in succession at different times with a single grouping command.

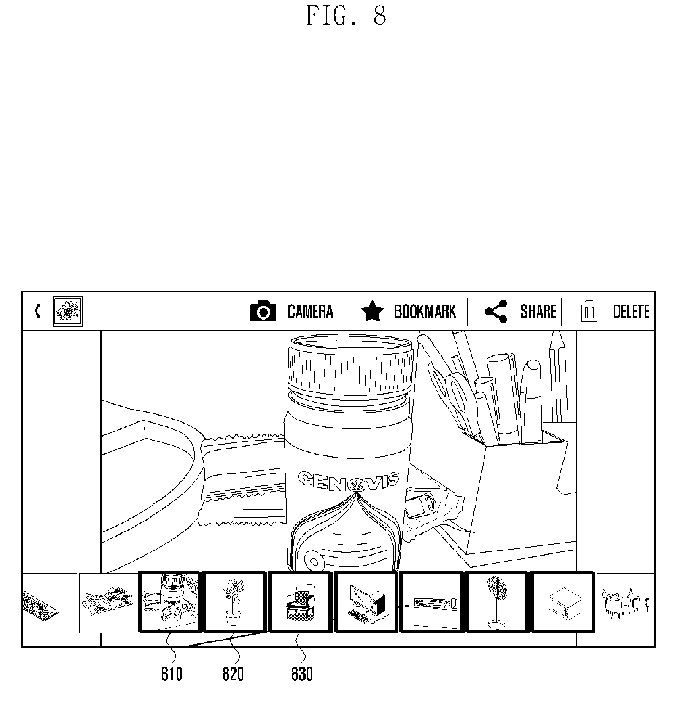

A screen representation illustrating a result of operations 430 to 445 is shown in FIG. 8.

FIG. 8 illustrates a result of grouping images into multiple groups of images having similar attributes in terms of shooting location or creation time (e.g., hour, day or year) according to an embodiment of the present disclosure.

Referring to FIG. 8, representative images 810, 820 and 830 are associated with groups of images classified according to the shooting location or creation time.

For example, assume, in order of time, that three burst-shot images of a bottle are taken at school, five burst-shot images of a flowerpot are taken at home, and seven burst-shot images of a chair are taken at a shop. In this case, upon reception of a grouping command from the user, the control unit 260 may group the burst-shot images according to the shooting location into groups of three images, five images and seven images, and display representative images 810, 820 and 830 respectively for the image groups.

As another example, assume that nine burst-shot images of a bottle are taken on the first of January, eleven burst-shot images of a flowerpot are taken on the second of January, and thirteen burst-shot images of a chair are taken on the third of January. In this case, upon reception of a grouping command from the user, the control unit 260 may group the burst-shot images according to the shooting time into groups of nine images, eleven images and thirteen images, and display representative images 810, 820 and 830 respectively for the image groups.

In various embodiments of the present disclosure, captured images may be grouped according to information obtained internally from the images or according to related external information obtained through a network using information obtained internally from the images, and representative images may be displayed accordingly.

For example, upon reception of a grouping command from the user, the control unit 260 may group captured images according to persons determined as appearing in the images through tag information and display representative images for the resulting groups.

As another example, when images of coffee brands with the same logo are captured, upon reception of a grouping command from the user, the control unit 260 may group the images according to coffee brands identified from the images and display representative images for the coffee brands received through a network.

Referring back to FIG. 3, at operation 340, the control unit 260 determines whether a user input received through the input unit 240 or the touchscreen 230 is an ungrouping command.

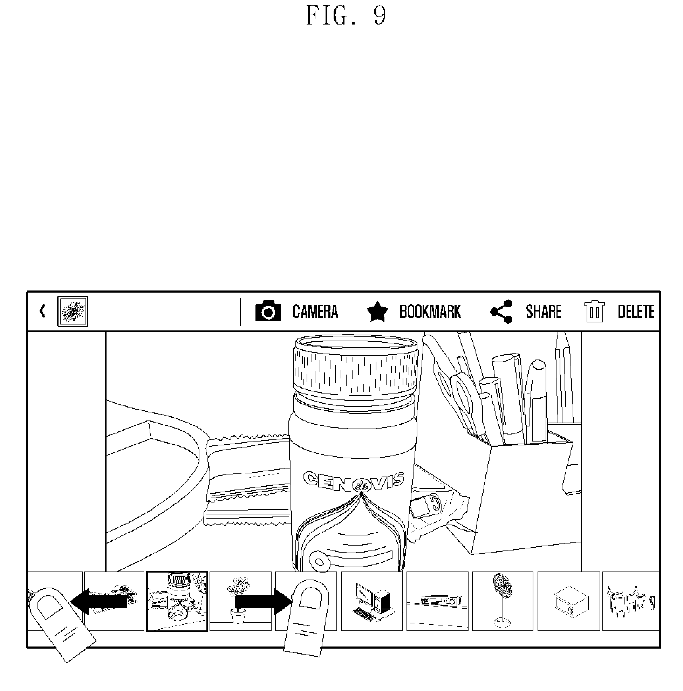

In one embodiment, an ungrouping command may correspond to a multipoint touch gesture that involves touching a representative image with two fingers and dragging the two fingers apart on the touchscreen 230. An example of an ungrouping command is illustrated in FIG. 9.

FIG. 9 illustrates entering of an ungrouping command according to an embodiment of the present disclosure.

As shown in FIG. 9, an ungrouping command may correspond to a multipoint touch gesture that involves touching a representative image with two fingers and dragging the two fingers apart on the touchscreen.

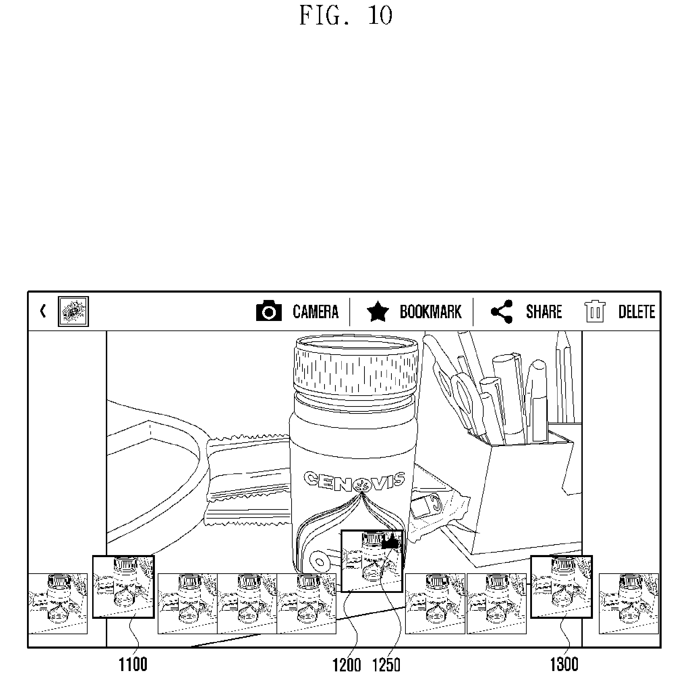

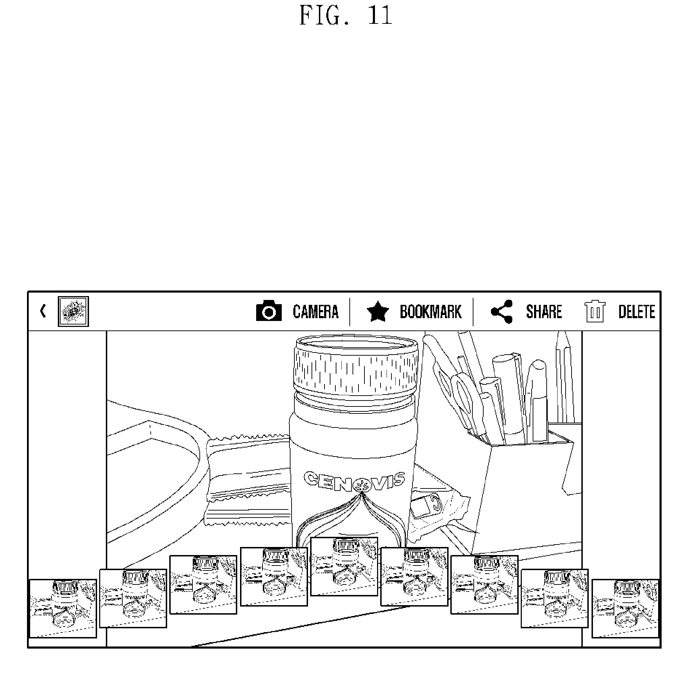

Referring back to FIG. 3, if the user input is an ungrouping command, the control unit 260 proceeds to operation 350 at which point the control unit 260 ungroups the corresponding group and displays the ungrouped images in succession. Here, the control unit 260 may select a recommended image from among the ungrouped images and display the recommended image in a manner distinguished from the other images. Screen representations illustrating a result of ungrouping are shown in FIGS. 10 and 11.

FIG. 10 illustrates display of ungrouped images and recommended images according to an embodiment of the present disclosure.

For example, upon reception of an ungrouping command for a group of burst-shot images of a bottle, the control unit 260 may display the burst-shot images in succession, select most acceptable images in terms of shake or resolution from among the ungrouped images as recommended images 1100, 1200 and 1300, and display the recommended images 1100, 1200 and 1300 in a manner distinguished from the other images. The control unit 260 may also display a recommended image together with an icon 1250 symbolic of a recommendation.

FIG. 11 illustrates another display of recommended images according to an embodiment of the present disclosure.

For example, upon reception of an ungrouping command for a group of burst-shot images of a bottle, the control unit 260 may rank the burst-shot images in order of less shake or high resolution and display the ungrouped images in order of recommendation as shown in FIG. 11.

According to various embodiments, at least part of a device (for example, modules or functions thereof) or a method (for example, operations) according to the various embodiments of the present disclosure may be embodied by, for example, one or more instructions stored in a non-transitory computer readable storage medium provided in a form of a programming module. When the command is executed by one or more processors (for example, control unit 260), the one or more processors may perform a function corresponding to the command. The non-transitory computer readable storage medium may be, for example, the storage unit 250. At least a part of the programming module may be implemented (for example, executed) by, for example, the control unit 260. At least a part of the programming module may include, for example, a module, a program, a routine, a set of instructions and/or a process for performing one or more functions.

The non-transitory computer readable recording medium may include magnetic media such as a hard disk, a floppy disk, and a magnetic tape, optical media such as a Compact Disc Read Only Memory (CD-ROM) and a DVD, magneto-optical media such as a floptical disk, and hardware devices specially configured to store and perform a program instruction (for example, programming module), such as a Read Only Memory (ROM), a Random Access Memory (RAM), a flash memory and the like.

Further, the program commands may include high class language codes that can be executed in a computer by using an interpreter, as well as machine language codes that are made by a compiler. The aforementioned hardware device may be configured to operate as one or more software modules in order to perform the operation of the present disclosure, and vice versa. A programming module according to the present disclosure may include at least one of the described component elements, a few of the component elements may be omitted, or additional component elements may be included. Operations executed by a module, a programming module, or other component elements according to various embodiments of the present disclosure may be executed sequentially, in parallel, repeatedly, or in a heuristic manner. Also, a few operations may be executed based on a different order, may be omitted, or may additionally include another operation.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for managing images stored in an electronic device, the method comprising:
receiving a grouping command in a state where images are displayed in succession;
grouping the displayed images so that images having compositions similar to those of images specified by the grouping command are combined into a single group; and
displaying a representative image for the group of images having similar compositions.

2. The method of claim 1, wherein the displaying of the representative image comprises:
grouping the displayed images so that images specified by the grouping command are combined into a single group; and
displaying a representative image for the group in replacement of the grouped images.

3. The method of claim 1, wherein the displaying of the representative image comprises:
grouping the displayed images into multiple groups of images having similar compositions according to a preset grouping rule; and
displaying representative images for the groups in replacement of the grouped images.

4. The method of claim 3, wherein the grouping rule specifies formation of a group of images having similar shooting locations or specifies formation of a group of images having similar creation times in terms of at least one of an hour, a day, a month, and a year.

5. The method of claim 3, wherein the grouping rule specifies formation of a group of images on the basis of information obtained from images to be grouped or related external information obtained through a network using information obtained internally from images to be grouped.

6. The method of claim 5, wherein the grouping rule specifies formation of a group of images on the basis of person information obtained from images to be grouped.

7. The method of claim 6, further comprising:
receiving an ungrouping command for a representative image; and
breaking an image group associated with the representative image into constituent images; and
displaying the constituent images in succession.

8. The method of claim 7, wherein the displaying of the constituent images in succession comprises:
selecting a recommended image from among the constituent images; and
displaying the recommended image in a manner distinguished from other images.

9. The method of claim 8, wherein the recommended image is selected according to preset criteria including at least one of resolution, quality, composition, and person information.

10. The method of claim 8, wherein the displaying of the recommended image comprises displaying the recommended image so that the recommended image differs from the other images in terms of at least one of size, height, color and graphical effect.

11. The method of claim 8, wherein the grouping command corresponds to a multipoint touch gesture that involves touching images displayed in succession with two touch points and dragging the two touch points together on the screen, and
wherein the ungrouping command corresponds to a multipoint touch gesture that involves touching a representative image with two touch points and dragging the two touch points apart on the screen.

12. An apparatus for managing images stored in an electronic device, the apparatus comprising:
a display unit configured to display images; and
a control unit configured to control a process of receiving a grouping command in a state where images are displayed in succession, to control to group the displayed images so that images having compositions similar to those of images specified by the grouping command are combined into a single group, and to control to display a representative image for the group of images having similar compositions.

13. The apparatus of claim 12, wherein the control unit is configured to control an operation to group the displayed images so that images specified by the grouping command are combined into a single group, and to control to display a representative image for the group in replacement of the grouped images.

14. The apparatus of claim 12, wherein the control unit is configured to control an operation to group the displayed images into multiple groups of images having similar compositions according to a preset grouping rule, and control to display representative images for the groups in replacement of the grouped images.

15. The apparatus of claim 14, wherein the grouping rule specifies formation of a group of images having similar shooting locations, specifies formation of a group of images having similar creation times in terms of at least one of an hour, a day, a month, and a year, or specifies formation of a group of images on the basis of information obtained from images to be grouped or related external information obtained through a network using information obtained internally from images to be grouped.
